# EUROPÄISCHE PATENTSCHRIFT

(11) **EP 2 710 239 B1**
(45) Veröffentlichungstag und Bekanntmachung des Hinweises auf die Patenterteilung: **10.06.2015**
(21) Anmeldenummer: 12715846.7
(22) Anmeldetag: 16.04.2012
(51) Int. Cl.: F01N 3/08

(54) **ABGASANLAGE MIT HC-ADSORBER UND PARALLELEM ABGASKATALYSATOR SOWIE FAHRZEUG MIT EINER SOLCHEN ABGASANLAGE**
EXHAUST SYSTEM WITH HC-ADSORBER AND CATALYST IN PARALLEL AND VEHICLE WITH SUCH A SYSTEM
SYSTEME D'ÉCHAPPEMENT AVEC PIÈGE HC ET CATALYSEUR EN PARALLEL ET VEHICULE ÉQUIPÉ D'UN TEL SYSTEME

(30) Priorität: 19.05.2011 DE 102011101982
(43) Veröffentlichungstag der Anmeldung: 26.03.2014
(73) Patentinhaber: Volkswagen Aktiengesellschaft, 38436 Wolfsburg (DE)
(72) Erfinder: BAETGE, Jörg-Dieter, 38165 Lehre (DE); DEGEN, Alf, 38536 Meinersen (DE); PAULOVSKY, Markus, 38448 Wolfsburg (DE); SEILER, Valeri, 29399 Wahrenholz (DE); MÄNNEL, Peter, 38446 Wolfsburg (DE)
(86) Internationale Anmeldenummer: PCT/EP2012/001640
(87) Internationale Veröffentlichungsnummer: WO 2012/156012

(56) Entgegenhaltungen:
- EP-A1- 1 400 665
- DE-A1-102006 058 554
- JP-A- 2000 337 135
- US-A1- 2006 123 772

## Beschreibung

Die Erfindung betrifft eine Abgasanlage mit einem Adsorber sowie ein Fahrzeug, welches eine solche Abgasanlage aufweist.

Der Einsatz von Katalysatoren in den Abgasanlagen von Verbrennungsmotoren ist heute selbstverständlich. Beispielsweise werden insbesondere bei Dieselmotoren Oxidationskatalysatören eingesetzt, welche unverbrannte Kohlenwasserstoffe (HC) sowie Kohlenmonoxid (CO) konvertieren, und ebenfalls bei Dieselmotoren und Ottomotoren Reduktionskatalysatoren, die Stickoxide (NOₓ) umsetzen. Darüber hinaus sind Drei-Wege-Katalysatoren bekannt, welche die Funktion von Oxidations- und Reduktionskatalysatoren vereinen und somit alle drei Komponenten katalytisch umsetzen und hauptsächlich bei Ottomotoren eingesetzt werden. Grundsätzlich benötigen sämtliche Katalysatoren eine spezifische Mindesttemperatur, die Light-off- oder Anspringtemperatur, bei der sie 50 % der limitierten Abgaskomponenten konvertieren. Nach einem Kaltstart des Motors ist diese Temperatur üblicherweise noch nicht erreicht, so dass, wenn keine weiteren Maßnahmen ergriffen werden, die als Startemissionen bezeichneten Emissionen unkonvertiert die Abgasanlage verlassen.

Heutige und erst recht zukünftige Abgasgesetzgebungen erfordern, dass die in standardisierten Fahrzyklen gemessenen Startemissionen zur Bestimmung der Gesamtemissionen eines Fahrzeugs mit erfasst werden. Der Wunsch nach einer weiteren Reduzierung von Emissionen sowie die zunehmend niedriger werdenden gesetzlichen Abgasgrenzwerte erfordern auch die Reduzierung der Startemissionen und somit das frühere Erreichen der Betriebstemperaturen des Katalysatorsystems.

Eine verbreitete Maßnahme zur Reduzierung der Startemissionen ist die motornahe Anordnung relativ kleinvolumiger Vorkatalysatoren, die auch als Startkatalysatoren bezeichnet werden. Aufgrund ihres geringen Volumens und ihrer motornahen Platzierung erreichen Vorkatalysatoren relativ schnell ihre Light-off-Temperatur und übernehmen dann die Konvertierung eines Großteils der Emissionen, bis auch ein nachgeschalteter Hauptkatalysator seine Betriebstemperatur erreicht hat.

Aus DE 100 21 421 A1 ist eine Abgasanlage bekannt, bei der eine Abgasturbine eines Abgasturboladers in einer Hauptleitung des Abgaskanals angeordnet ist und diese von einer parallel geführten Bypassleitung umgehbar ist. In der Bypassleitung ist ein als Drei-Wege-Katalysator oder als HC-Adsorber ausgestalteter Vorkatalysator angeordnet. Eine steuerbare Klappe kann wechselseitig die Bypassleitung oder die Hauptleitung verschließen, wobei auch Zwischenstellungen vorgesehen sein können. Nach einem Kaltstart wird zunächst der gesamte Abgasstrom durch die Bypassleitung über den Vorkatalysator geleitet. Sobald ein nachgeschalteter Hauptkatalysator seine Anspringtemperatur erreicht hat, wird die Klappe umgelegt und der Abgasstrom über die Abgasturbine in der Hauptleitung geleitet.

US 2002/0132726 A1 beschreibt ein Abgasanlage, die einen Hauptkatalysator aufweist sowie stromab von diesem zwei parallele Abgasleitungen, die mittels eines Umklappventils wechselweise verschlossen bzw. geöffnet werden können. Die zwei parallelen Abgasleitungen haben eine konzentrische Anordnung mit einer innen liegenden Hauptleitung und einer diese konzentrisch umschließenden Nebenleitung, in welcher ein ringförmiger HC-Adsorber angeordnet ist. Aus der Nebenleitung stromauf des HC-Adsorbers zweigt eine Rückführungsleitung ab, welche unverbrannte und aus dem Adsorber desorbierte Kohlenwasserstoffe dem Verbrennungsmotor zuführt. Nach einem Kaltstart wird die innen liegende Hauptleitung verschlossen und der Abgasstrom über den HC-Adsorber geleitet, der die unverbrannten und von dem noch nicht betriebsbereiten Hauptkatalysator nicht umgesetzten Kohlenwasserstoffe HC adsorbiert und/oder chemisorbiert. Sobald der Hauptkatalysator seine Betriebstemperatur erreicht hat und somit eine ausreichende HC-Konvertierung sicherstellt, wird der Abgasstrom in die Hauptleitung gelenkt. Aufgrund der nun stattfindenden Erwärmung desorbieren die Kohlenwasserstoffe vom HC-Adsorber und werden über die Rückführungsleitung der motorischen Verbrennung zugeführt.

Aus US 5,315,824 ist ein ähnliches Konzept bekannt, das ebenfalls die konzentrische Struktur aus außen liegendem HC-Adsorber mit einer Cordierit-Beschichtung und innen liegender Hauptleitung verwendet, wobei in diesem Konzept der Hauptkatalysator jedoch dem HC-Adsorber nachgeschaltet ist. Außerdem weist die Abgasanlage einen motornahen Vorkatalysator auf. In diesem Aufbau entfällt die in US 2002/0132726 A1 beschriebene Rückführungsleitung. Vielmehr werden die desorbierten Kohlenwasserstoffe von dem nachgeschalteten Hauptkatalysator umgesetzt. Nach einem Motorkaltstart wird hier das Abgas zunächst über den HC-Adsorber geleitet, der bei Temperaturen bis etwa 90 °C HC speichert. Sobald der HC-Adsorber temperaturbedingt beginnt, die Kohlenwasserstoffe zu desorbieren, hat der Vorkatalysator eine Temperatur erreicht, welche die Konvertierung der motorisch emittierten Kohlenwasserstoffe gestattet. In dieser Phase wird das Abgas durch die Hauptleitung geleitet, um den HC-Adsorber zu umgehen. Sobald der nachgeschaltete Hauptkatalysator zumindest bereichsweise seine Light-off-Temperatur erreicht hat, erfolgt wiederum eine Leitung des Abgases über den HC-Adsorber, um die aus diesem freigesetzten Kohlenwasserstoffe in den Hauptkatalysator zu spülen und zu konvertieren. Die hier vorgeschlagene konstruktive Lösung der parallelen Abgasleitungsführung ist relativ aufwändig.

Eine einfachere und kostengünstigere Konstruktion der parallelen Abgasführung ist aus JP 2008-133802 A bekannt (vgl. vorliegende Figur 2), bei der der ringförmige HC-Adsorber auf einem konzentrischen, die Hauptleitung definierenden Innenrohr getragen wird, welches stromaufwärtig über die Länge des HC-Adsorbers hinausragt. In diesem überstehenden Teil des Innenrohrs ist eine drehbare Abgasklappe angeordnet, welche die innen liegende Hauptleitung verschließen oder öffnen kann. In der geschlossenen Stellung wird der Abgasstrom über den Adsorber geleitet, während in der geöffneten Stellung der wesentliche Anteil des Abgasstroms aufgrund des größeren Strömungswiderstandes des Adsorbers die innen liegende Hauptleitung passiert. Der Strömungswiderstand der Nebenleitung wird zudem noch dadurch erhöht, dass stromab des ringförmigen HC-Adsorbers eine Lochblende mit definierten Durchgangsöffnungen angeordnet ist. Jedoch bedeutet das Erfordernis dieser Lochblende wiederum einen erhöhten Konstruktionsaufwand. Ferner kann trotz dieser Maßnahme ein Leckagestrom durch den HC-Adsorber bei geöffneter Abgasklappe nicht gänzlich vermieden werden.

Schließlich ist den vorstehend diskutierten Konstruktionen gemein, dass der ringförmige HC-Adsorber auf einem konzentrisch innen angeordnetem Rohr gelagert wird, weswegen als Trägerkörper für den HC-Adsorber praktisch nur gewickelte Metallträger in Frage kommen. Der Einbau von keramischen Trägerkörpern (Monolithen), die aufgrund ihrer Stoßempfindlichkeit sowohl an ihrem Außen- als auch an ihrem Innenumfang eine Einbettung (Canning) benötigten, wäre hier sehr aufwändig. Die Anwendung von keramischen Trägern ist jedoch u.a. deswegen wünschenswert, da diese beispielsweise mit einer Partikelfilterfunktion ausgestattet werden können.

Die Dokumente JP 2000-337135, EP 1 400 665 A1 und US 2006/0123772 A1 zeigen Ausführungsförmen von Abgasanlagen für Verbrennungsmotoren, welche jeweils einen einem Abgasweg mit zwei parallelen Abgasleitungen in Form einer Hauptleitung sowie einer Nebenleitung, welche in eine gemeinsame Abgasleitung münden aufweisen, wobei in der Nebenleitung ein Adsorber zur reversiblen Sorption unverbrannter Kohlenwasserstoffe (HC) beziehungsweise von Stickoxiden (NOₓ) angeordnet ist. Des Weiteren ist jeweils ein Stellmittel zur selektiven Leitung eines Abgasstroms in die Hauptleitung und/oder in die Nebenleitung vorhanden. In der EP 1 400 665 A1 ist darüber hinaus stromab der parallelen Abgasleitungen in der gemeinsamen Abgasleitung ein Hauptkatalysator angeordnet.

Der Erfindung liegt nun die Aufgabe zugrunde, den zuvor genannten Stand der Technik dahin gehend weiterzuentwickeln, dass bei geöffnetem Abgasstellmittel (z.B. Abgasklappe) ein Leckagestrom des Abgases durch den Adsorber verringert wird. Idealerweise sollte darüber hinaus die Abgasanlage so gestaltet sein, dass auch der Einsatz von Keramikträgern für den HC-Adsorber mit einem vertretbaren Aufwand ermöglicht wird.

Diese Aufgaben werden zumindest teilweise durch eine Abgasanlage sowie ein Fahrzeug mit den Merkmalen der unabhängigen Ansprüche gelöst.

Die erfindungsgemäße Abgasanlage für einen Verbrennungsmotor umfasst einen Abgasweg, der zumindest abschnittsweise zwei parallele Abgasleitungen aufweist, nämlich eine Hauptleitung sowie eine Nebenleitung. Dabei ist in der Nebenleitung ein Adsorber zur reversiblen Sorption unverbrannter Kohlenwasserstoffe (HC) und/oder von Stickoxiden (NOₓ) angeordnet. Ferner ist ein Stellmittel zur selektiven Leitung eines Abgasstroms in die Hauptleitung und/oder in die Nebenleitung vorgesehen. Die Abgasanlage umfasst ferner einen stromab der parallelen Abgasleitungen im Abgasweg angeordneten gemeinsamen Hauptkatalysator. Die erfindungsgemäße Abgasanlage zeichnet sich dadurch aus, dass stromauf des Adsorbers ein abgasstromführendes, gasdurchlässiges Element mit rohrförmiger Gestalt, deren stromabwärtiges Ende an eine Eintrittsöffnung der innen liegenden der parallelen Abgasleitungen ohne Innenrohr, das den Adsorber trägt und die parallelen Abgasleitungen trennt, anschließt, und mit einer Mehrzahl von Durchgangsöffnungen für den Abgasstrom angeordnet ist, welches das stromaufwärtige Ende der Nebenleitung (und somit den Eintrittsbereich des Adsorbers) von den übrigen abgasstromführenden Bereichen der Abgasanlage trennt.

Durch die Trennung der den Adsorber beherbergenden Nebenleitung von den übrigen Leitungsbereichen, insbesondere von der den Adsorber umgehenden Hauptleitung, durch die erfindungsgemäße Anordnung des abgasstromführenden, gasdurchlässigen Elements kann einerseits die im Stand der Technik beschriebene Lochblende stromab des Adsorbers entfallen. Gleichzeitig wird durch diese Maßnahme der so genannte Leckagestrom des Abgases, der bei geöffnetem Stellmittel den Adsorber durchströmt, vermindert. Der Grund ist in erster Linie hierin zu sehen, dass der durch das gasdurchlässige Element verursachte Strömungswiderstand bereits stromauf des Adsorbers angeordnet ist und somit der Abgasstrom erst gar nicht den Adsorber erreicht.

Dabei wird im Rahmen der vorliegenden Erfindung der Begriff "parallele Abgasleitungen" nicht notwendigerweise im geometrischen Sinn verstanden, sondern strömungstechnisch dergestalt, dass die beiden Abgasleitungen alternative Strömungswege für den Abgasstrom darstellen. Mit anderen Worten passiert ein individuelles Abgasvolumen immer nur eine der beiden parallelen Abgasleitungen. Ferner bedeutet der Begriff "parallele Abgasleitung(en)" oder "Hauptleitung" oder "Nebenleitung" nicht notwendigerweise das Vorhandensein eines die entsprechende Leitung umgebenden Rohrs. Vielmehr wird mit diesen Begriffen lediglich ein Strömungsweg des Abgases bezeichnet, der durch beliebige Bauteile definiert sein kann.

In einer speziellen Ausgestaltung der Erfindung ist das abgasstromführende, gasdurchlässige Element aus einem an sich gasundurchlässigen Material gebildet, das seine Gasdurchlässigkeit einer Mehrzahl von Durchgangsöffnungen für den Abgasstrom verdankt. Insbesondere kann es als ein perforiertes Blech ausgebildet sein, etwa als ein perforiertes Rohr oder eine perforierte Blende. In jedem Fall ist die Gasdurchlässigkeit des Elements für das Abgas vorzugsweise so abgestimmt, dass der durch das Element im Zusammenspiel mit dem Adsorber erzeugte Abgasgegendruck hoch genug ist, um bei geöffnetem Stellmittel einen möglichst quantitativen Durchfluss des Abgases durch die Hauptleitung zu bewirken, und andererseits gering genug, um bei geschlossenem Stellmittel keinen unzulässig hohen Gegendruck zu erzeugen.

Nach einer weiteren bevorzugten Ausgestaltung weisen die parallelen Abgasleitungen einen Aufbau auf, bei dem eine der parallelen Abgasleitungen die andere zumindest abschnittsweise umschließt. Dies kann besonders bevorzugt eine konzentrische (koaxiale) Anordnung sein, bei der beide Leitungen einen gemeinsamen Mittelpunkt beziehungsweise eine gemeinsame Zentralachse aufweisen. Vorteil dieser Ausgestaltung ist eine optimale Bauraumnutzung sowie ein guter gegenseitiger Wärmeaustausch. In diesem Zusammenhang kann insbesondere die den Adsorber beherbergende Nebenleitung die Hauptleitung umschließen. Hierdurch wird eine gute Kühlung des Adsorbers über die Außenwandung erreicht, so dass dieser erst verzögert seine Desorptionstemperatur erreicht, nämlich möglichst erst dann, wenn der nachgeschaltete Hauptkatalysator oder ein gegebenenfalls vorgesehener motornaher Vorkatalysator seine Anspringtemperatur (Light-off-Temperatur) erreicht hat. Auf der anderen Seite dient der erwärmte Adsorber der Vorerwärmung des Abgases und somit der schnelleren Erwärmung des nachgeschalteten Hauptkatalysators.

Mit Vorteil weist erfindungsgemäß das abgasstromführende, gasdurchlässige Element eine rohrförmige Gestalt auf, deren stromaufwärtiges Ende an ein, die parallelen Abgasleitungen beherbergendes Gehäuse oder an einen Eingangsstutzen für ein solches Gehäuse anschließt. Bei der rohrförmigen Ausgestaltung schließt vorzugsweise das stromabwärtige Ende an eine Eintrittsöffnung der innen liegenden Leitung der parallelen Abgasleitungen an, insbesondere an die Eintrittsöffnung der Hauptleitung. In dieser

Ausgestaltung wird das Abgas bei geöffnetem Stellmittel widerstandslos in die Hauptleitung geleitet und dringt nur zu einem vernachlässigbaren Anteil durch das gasdurchlässige Element, so dass der Leckagestrom noch weiter verringert wird. Gleichzeitig ist die Ausführung des abgasstromführenden, gasdurchlässigen Elements mit rohrförmiger Gestalt, beispielsweise als Perforationsrohr, einfach und kostengünstig realisierbar.

Im Zusammenhang mit einer rohrförmigen Gestalt des abgasstromführenden, gasdurchlässigen Elements ist ferner bevorzugt vorgesehen, dass das Stellmittel zur selektiven Leitung des Abgases in die Haupt- und/oder Nebenleitung in einem stromabwärtigen Abschnitt dieses Elements gelagert ist. Hierdurch ist bei geschlossener Stellung des Stellmittels die Hauptleitung verschlossen, so dass das Abgas die weiter stromaufwärtigen gasdurchlässigen Bereiche des Elements beaufschlagt und durchdringt.

Das Stellmittel kann beispielsweise als eine Abgasklappe ausgebildet sein, die insbesondere drehbar in dem rohrförmig ausgebildeten abgasstromführenden, gasdurchlässigen Element gelagert sein kann.

Nach einer weiteren vorteilhaften Ausgestaltung ist das Stellmittel zur selektiven Leitung des Abgasstroms in die Hauptleitung und/oder in die Nebenleitung ausgebildet, neben einer geschlossenen Stellung und einer geöffneten Stellung zumindest eine Zwischenstellung einnehmen zu können, in der ein Teil des Abgasstroms in die Hauptleitung und der andere Teil des Abgasstroms in die Nebenleitung gelenkt wird. Vorzugsweise ist das Stellmittel kontinuierlich zwischen der geschlossenen der geöffneten Stellung verstellbar. Indem somit das Stellmittel nicht als 2-Punkt-Element mit den Stellungen AUF und ZU ausgeführt ist, sondern auch Zwischenstellungen möglich sind, in denen ein variabler Teil des Abgasstroms über den Adsorber und der andere Teil durch die Hauptleitung geführt wird, kann die Abgasverteilung genauer auf die Erwärmungsgrade der Abgasreinigungskomponenten abgestimmt werden.

Nach einer besonders bevorzugten Ausgestaltung der Erfindung weist der Adsorber eine ringförmige Gestalt auf, wobei die Hauptleitung im Wesentlichen durch einen, von dem Adsorber umschlossenen Hohlraum definiert wird. In dieser Ausgestaltung wird somit die äußere Wandführung der Hauptleitung zumindest abschnittsweise durch den Adsorber gebildet, ohne dass ein eigenes Rohr hierfür vorgesehen ist. Neben einer konstruktiven Vereinfachung durch den Wegfall eines, den Adsorber lagernden Innenrohrs vereinfacht diese Ausgestaltung den Einsatz eines keramischen Trägerkörpers für den Adsorber, von dem eine weitere bevorzugte Ausgestaltung der Erfindung Gebrauch macht. So muss der keramische Trägerkörper (Monolith) lediglich an seinem äußeren Umfang in einem stoßdämpfenden Einbettungsmaterial in ein äußeres Gehäuse gelagert werden und ein entsprechendes, konstruktiv aufwändiges Canning auf der Innenseite entfällt.

Im Rahmen der vorliegenden Erfindung wird der Begriff "Adsorber" ein von Abgas durchströmbares Bauteil verstanden, das im Wege von Adsorption und/oder Absorption ein Abgasbestandteil reversibel zu sorbieren vermag. Bei dem Adsorber kann es sich um einen HC-Adsorber zur reversiblen Speicherung von Kohlenwasserstoffen HC und/oder um einen NOₓ-Adsorber zur reversiblen Speicherung von Stickoxiden NOₓ, beispielsweise im Wege der Chemisorption, handeln. Vorzugsweise ist er als HC-Adsorber ausgestaltet. Entsprechende Beschichtungen (für metallische oder keramische Träger), welche diese Aufgaben erfüllen, sind im Stand der Technik hinreichend bekannt.

Der Adsorber kann gemäß einer vorteilhaften Ausgestaltung zusätzlich zu seiner Speicherfunktion für HC und/oder NOₓ auch eine Partikelfilterfunktion aufweisen. Eine solche lässt sich durch die Verwendung eines keramischen Trägerkörpers in prinzipiell bekannter Weise durch geschlossene Strömungskanäle des keramischen Trägermaterials realisieren.

Zusätzlich oder alternativ kann der Adsorber auch eine katalytische Funktion, insbesondere eine drei-wege-katalytische Funktion aufweisen, d.h. eine Beschichtung, die ein katalytisches Material enthält. Im Falle einer drei-wege-katalytischen Beschichtung, welche die Konvertierung der drei Abgaskomponenten HC, CO und NOₓ bewirkt, handelt es sich beispielsweise um Platin, Rhodium und/oder Palladium, insbesondere um eine Kombination von Platin und Rhodium oder von Palladium und Rhodium. Bei einer Kombination einer drei-wege-katalytischen Funktion und einer Partikelfilterfunktion spricht man auch von einem Vier-Wege-Katalysator.

Nach einer bevorzugten Ausführung sind die parallelen Abgasleitungen, der Adsorber, das abgasstromführende, gasdurchlässige Element sowie das Stellmittel in einem gemeinsamen Gehäuse angeordnet, wobei besonders bevorzugt auch der nachgeschaltete Hauptkatalysator gemeinsam mit den vorgenannten Elementen in einem solchen gemeinsamen Gehäuse untergebracht ist. Typischerweise kann ein solches Gehäuse jeweils einen eingangsseitigen und einen ausgangsseitigen Stutzen umfassen, der mit dem Abgaskanal etwa über Flanschverbindungen verbunden sein kann. Diese Katalysatoreinheit, die einen weiteren Aspekt der vorliegenden Erfindung darstellt, kann insbesondere an einer Unterbodenposition eines Fahrzeugs angeordnet sein.

Ein weiterer Aspekt der vorliegenden Erfindung betrifft ein Fahrzeug, das die erfindungsgemäße Abgasanlage aufweist.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: schematisch eine Abgasanlage gemäß der vorliegenden Erfindung;
- Figur 2: eine Katalysatoreinheit gemäß Stand der Technik für eine Abgasanlage nach Figur 1;
- Figur 3: eine erfindungsgemäße Katalysatoreinheit für eine Abgasanlage nach Figur 1 gemäß einer ersten Ausgestaltung und
- Figur 4: eine erfindungsgemäße Katalysatoreinheit für eine Abgasanlage nach Figur 1 gemäß einer zweiten Ausgestaltung.

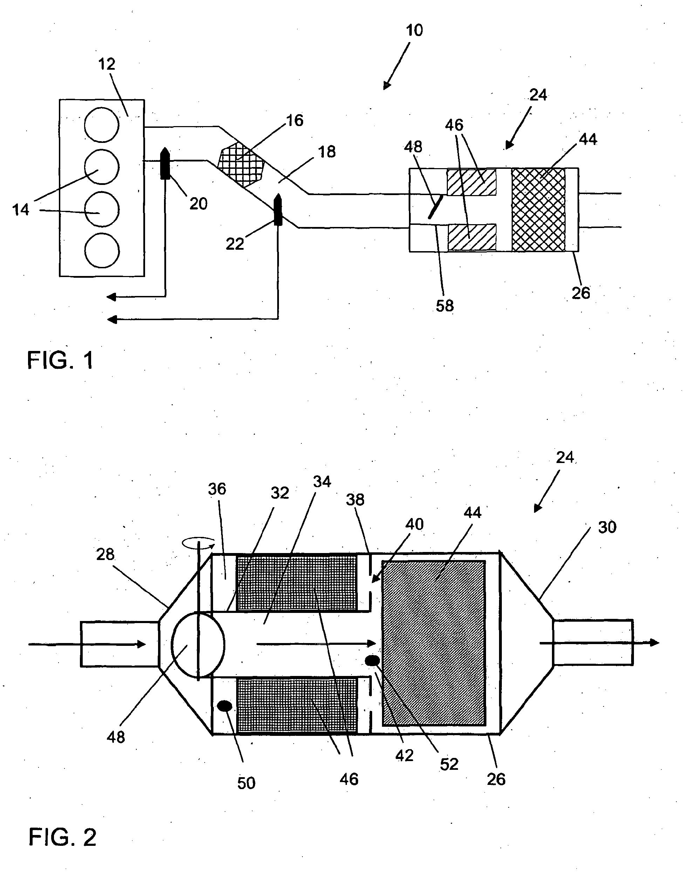

Figur 1 zeigt eine schematische Überblicksansicht einer erfindungsgemäßen Abgasanlage 10.

Das Abgas eines Verbrennungsmotors 12, beispielsweise eines Ottomotors, tritt über Abgasauslasse seiner Zylinder 14 zunächst in einen nicht dargestellten Abgaskrümmer ein. An einer motornahen Position, insbesondere unmittelbar an den Abgaskrümmer anschließend, kann ein kleinvolumiger Vorkatalysator 16 angeordnet sein, der die Funktion eines Startkatalysators erfüllt, indem er nach einem Kaltstart des Verbrennungsmotors sich sehr schnell erwärmt und die Hauptkonvertierungsleistung nach seinem Light-off nach Motorstart bis zu einem Anspringen eines nachgeschalteten Konverters übernimmt. Je nach Art des Verbrennungsmotors kann der Vorkatalysator 16 ein Oxidations- oder ein Drei-Wege-Katalysator sein. Der Vorkatalysator 16 ist beispielsweise über eine Flanschverbindung mit einem Abgasrohr 18 verbunden.

An einer motornahen Position stromauf des Vorkatalysators 16 ist eine erste Lambdasonde 20 angeordnet, die einen Sauerstoffgehalt des Rohabgases des Motors misst und in bekannter Weise der Regelung des Luft-Kraftstoff-Gemischs des Motors dient. Weiter kann stromab des Vorkatalysators 16 eine zweite Lambdasonde 22 vorgesehen sein. Die zweite Lambdasonde 22 kann verschiedene Funktionen erfüllen. Beispielsweise kann sie der Diagnose des Vorkatalysators 16 dienen, dem Abgleich der Sonden untereinander und/oder der Gemischregelung.

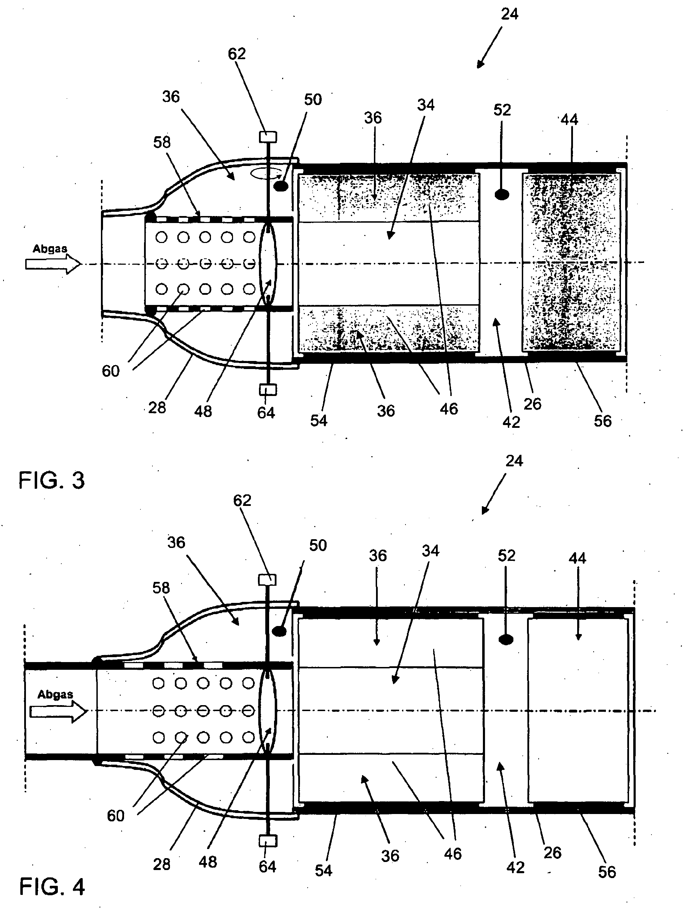

Das Abgasrohr 18 ist mit seinem ausgangsseitigen Ende an eine Katalysatoreinheit 24 angeschlossen, die in einer bekannten Ausführung nachfolgend anhand von Figur 2 und in einer erfindungsgemäßen Ausführung anhand von Figur 3 näher erläutert wird.

Die Katalysatoreinheit 24 weist im vorliegenden Beispiel ein gemeinsames Katalysatorgehäuse 26 auf, das eingangsseitig einen trichterförmigen Eingangsstutzen 28 und ausgangsseitig einen ebenfalls trichterförmigen Ausgangsstutzen 30 aufweist. Eingangs- und Ausgangsstutzen 28, 30 verjüngen sich jeweils nach außen, um ihren Rohrdurchmesser im Wesentlichen dem des Abgasrohrs 18 anzugleichen. Der Anschluss an das Abgasrohr kann beispielsweise über Flanschverbindungen oder dergleichen erfolgen.

In einem eingangsseitigen Abschnitt des Katalysatorgehäuses 26 ist gemäß dem dargestellten Stand der Technik ein konzentrisches Innenrohr 32 angeordnet, so dass sich der Abgasweg in diesem Abschnitt in zwei parallele Abgasleitungen aufspaltet, nämlich eine innen liegende Hauptleitung 34 sowie eine ringförmige, die Hauptleitung 34 umhüllende Nebenleitung 36. An einem Einmündungsbereich 38 werden die parallelen Abgasleitungen 34, 36 wieder zusammengeführt. Der Einmündungsbereich 38 ist im dargestellten Beispiel als eine kragenförmige Aufweitung des Innenrohrs 32 ausgebildet und weist eine Mehrzahl von Einmündungsöffnungen 40 auf, durch welche das Abgas der Nebenleitung 36 in eine gemeinsame Abgasleitung 42 strömt.

Die Katalysatoreinheit 24 enthält verschiedene Abgasreinigungskomponenten. So ist stromab der parallelen Abgasleitungen 34, 36 ein Hauptkatalysator 44 in der gemeinsamen Abgasleitung 42 angeordnet, der insbesondere eine Drei-Wege-katalytische Beschichtung aufweist und somit der Konvertierung von unverbrannten Kohlenwasserstoffen HC, Kohlenmonoxid CO sowie Stickoxiden NOₓ dient. Ferner ist in der Nebenleitung 36 ein ringförmiger Adsorber 46 angeordnet, der insbesondere ein HC-Adsorber ist. Der Adsorber 46 umfasst im Stand der Technik aus fertigungstechnischen Gründen einen metallischen Trägerkörper, der typischerweise aus gewickelten Metallblechen besteht. Der metallische Trägerkörper weist eine Zeolith-Beschichtung auf, welche unverbrannte Kohlenwasserstoffe HC adsorptiv zu binden vermag und bei erhöhten Temperaturen wieder desorbiert. Geeignete HC-Adsorber sind dem Fachmann bekannt und bedürfen keiner näheren Erläuterung.

Die Katalysatoreinheit 24 weist ferner ein Stellmittel 48 zur selektiven Umleitung des Abgasstroms in die Hauptleitung 34 und/oder in die Nebenleitung 36 auf. Das Stellmittel 48 ist im vorliegenden Beispiel als eine an einer Achse drehbar gelagerte Klappe ausgestaltet, welche eingangsseitig an dem Innenrohr 32 angeordnet ist und zwischen einer geöffneten Stellung und einer geschlossenen Stellung durch einen geeigneten Aktuator bewegt werden kann. In der geschlossenen Stellung verschließt die Klappe die Hauptleitung 34, so dass der Abgasstrom durch die Nebenleitung 36 und über den Adsorber 46 geführt wird. In der in Figur 2 gezeigten geöffneten Stellung sind sowohl die Hauptleitung 34 als auch die Nebenleitung 36 geöffnet. Um in diesem Fall den Abgasstrom zumindest hauptanteilig durch die Hauptleitung 34 zu leiten, muss der Einmündungsbereich 38 und insbesondere dessen Öffnungen 40 so ausgelegt sein, dass ein ausreichend hoher Abgasgegendruck erzeugt wird, wobei mit kleineren Öffnungsquerschnitten der Abgasgegendruck erhöht und der Abgasstrom stärker durch die Hauptleitung 34 gezwungen wird.

Zur Steuerung des Stellmittels 48 und damit zur Leitung des Abgasstroms über den Adsorber 46 oder durch die Hauptleitung 34 sind stromauf des HC-Adsorbers 46 sowie in der gemeinsamen Abgasleitung 38 stromauf des Hauptkatalysators 44 Temperatursensoren 50, 52 angeordnet. Die Sensoren 50, 52 messen die Abgastemperatur und lassen somit Rückschlüsse auf die Temperaturen des Adsorbers 46 beziehungsweise des Hauptkatalysators 44 zu. Denkbar ist auch, die Temperatursensoren direkt in den entsprechenden Komponenten zu installieren.

Figur 3 zeigt eine Katalysatoreinheit 24 gemäß einer ersten Ausgestaltung der vorliegenden Erfindung, bei der übereinstimmende Elemente mit den gleichen Bezugszeichen wie in Figur 2 versehen sind. Soweit nicht anders erwähnt, stimmen Merkmale und Funktion der übereinstimmenden Elemente überein.

Die Katalysatoreinheit 24 weist wiederum ein Katalysatorgehäuse 26 auf, das eingangsseitig einen sich in Richtung des Motors 12 verengenden Eingangsstutzen 28 aufweist (sowie einen hier nicht dargestellten Ausgangsstutzen). Außerdem ist in einem stromaufwärtigen Bereich der Katalysatoreinheit 24 der Abgasweg getrennt ausgeführt, umfassend eine Hauptleitung 34 sowie eine Nebenleitung 36, wobei in der dargestellten Ausführung letztere die Hauptleitung 34 koaxial umschließt. In der Nebenleitung ist ein ringförmig ausgestalteter Adsorber 46 angeordnet, während stromab der parallelen Abgasleitungen 34, 36 ein nachgeschalteter Hauptkatalysator 44 in der gemeinsamen Abgasleitung 42 angeordnet sind.

Anders als in der in Figur 2 dargestellten Ausführung ist in der erfindungsgemäßen Anordnung bevorzugt kein Innenrohr 32 vorgesehen, das den Adsorber 46 trägt und die parallelen Abgasleitungen 34, 36 voneinander trennt. Vielmehr wird der Adsorber lediglich von einem stoßdämpfenden umlaufenden Lagermittel 54 in dem Gehäuse 26 gehalten, das insbesondere als Fasermatte (beispielsweise aus Aluminiumoxidfasern) oder als so genannte Blähmatte ausgestaltet sein kann. Der Hauptkatalysator 44 wird ebenfalls in einem entsprechenden Lagermittel 56 gehalten. Derartige Lagermittel sind allgemein bekannt und dienen hauptsächlich der Fixierung der Abgasreinigungselemente im Gehäuse, der Dämpfung von Schwingungen sowie dem Ausgleich von Wärmedehnungen und somit der Vermeidung von Spannungen. Die innen liegende Hauptleitung 34 wird in dieser Ausführung somit im Wesentlichen durch den inneren Hohlraum des Adsorbers 46 begrenzt und definiert. Der Wegfall des Innenrohrs 32 hat den Vorteil, dass der Einsatz eines keramischen Trägerkörpers für den Adsorber 34 vereinfacht oder sogar erst ermöglicht wird, da eine andernfalls erforderliche Lagerung des keramischen Adsorbers 46 auf dem Innenrohr und Einbettung mit einer Lagermatte wie am Außenumfang konstruktiv sehr aufwändig ist.

Erfindungsgemäß ist stromauf des Adsorbers 46 ein abgasstromführendes, gasdurchlässiges Element 58 angeordnet, welches die, den Adsorber 46 beherbergende Nebenleitung 36 und damit den Eintrittsbereich des Adsorbers 46 von den übrigen abgasführenden Bereichen der Abgasanlage 10 trennt. Zur Realisierung der Gasdurchlässigkeit weist das Element 58 eine Vielzahl von Durchgangsöffnungen 60 auf. Das Element 58 ist in der dargestellten Ausführung rohrförmig ausgestaltet und mit seinem vorderen (stromaufwärtigen) Ende an den Eingangsstutzen 28 beispielsweise durch Verschweißen angebunden. In Abwandlung der Darstellung kann das Element 58 auch länger ausgeführt sein, so dass es mit seinem vorderen Ende mit dem Eingangsstutzen 28 abschließt oder diesen sogar überragt (s. Figur 4). Im letztgenannten Fall kann der vordere Rand des rohrförmigen Elements 58 auch flanschartig um den vorderen Rand des Stutzens 28 umgestülpt und mit diesem verbunden werden.

Auf der anderen Seite schließt das stromabwärtige Ende des Elements 58 an der Eintrittsöffnung der innen liegenden Hauptleitung 34 an. Dabei wird bevorzugt ein geringer Spalt zum Adsorber 46 eingehalten, um eine Stoß- und Spannungsübertragung zu vermeiden. Das Rohrelement 58 ragt somit einseitig frei und berührungslos in das Gehäuse 26 hinein. Wie dargestellt, entspricht der Durchmesser des Elements 58 bevorzugt dem lichten Innendurchmesser des Adsorbers 46 beziehungsweise der Weite der Hauptleitung 34, so dass das Element 58 im Wesentlichen mit der durch den Adsorber 46 definierten Hauptleitung 34 fluchtet. In nicht dargestellter alternativer Ausgestaltung kann das Element 58 auch einen Außendurchmesser aufweisen, der geringfügig kleiner als der lichte Innendurchmessers des Adsorbers 46 ist und in diesen vorzugsweise berührungslos hineinragt.

Das Stellmittel 48 zur selektiven Leitung des Abgases in die, den Adsorber 46 beherbergende Nebenleitung 36 und/oder in die, den Adsorber umgehende Hauptleitung 34 ist in dem rohrförmigen Element 58 angeordnet und in diesem drehbar gelagert. Das beispielsweise als Abgasklappe ausgebildete Stellmittel 48 wird durch einen Aktuator 62 bewegt, beispielsweise einen Elektromotor. Es kann ferner ein Sensor 64 vorgesehen sein, der die Position des Stellmittels 48 erfasst. In der geöffneten Stellung des Stellmittels 48 wird die Hauptleitung 34 freigegeben und in der geschlossenen Stellung verschlossen, so dass der Abgasstrom durch die Nebenleitung 36 und über den Adsorber 46 geführt wird. Vorzugsweise ist das Stellmittel 48 zudem in Zwischenstellungen schaltbar, so dass der Abgasstrom anteilig in die Hauptleitung 34 und in die Nebenleitung 36 geleitet werden kann.

Anders als im Stand der Technik etwa gemäß Figur 2 wird durch das gasstromführende Element 58 erreicht, dass bei geöffnetem Stellmittel 48 der Abgasstrom, der den Adsorber 46 umgehen soll, diesen nicht direkt beaufschlagt, sondern in die Hauptleitung 34 geführt wird. Auf diese Weise wird eine Leckage des Abgasstroms durch den Adsorber bei geöffneter Klappe 48 verringert und somit Emissionen der adsorbierten Abgaskomponente vermindert. Auch kann in dieser Konstruktion die dem Adsorber 46 nachgeschaltete Lochblende 38 (s. Figur 2) entfallen.

Wie bereits erwähnt, handelt es sich bei dem Trägerkörper des Adsorbers 46 bevorzugt um einen keramischen Träger, wie er in der Abgastechnik allgemein bekannt ist. Die gewünschte Speicherfunktion für Kohlenwasserstoffe und/oder Stickoxide wird durch eine geeignete Washcoat-Beschichtung des keramischen Materials in ebenfalls bekannter Weise dargestellt. Beispielsweise kann für die Realisierung einer HC-Speicherfunktion eine zeolithhaltige Beschichtung eingesetzt werden, welche HC durch Adsorption bis zu einer gewissen Temperaturgrenze speichert. Soll eine NOₓ-Speicherfunktion hergestellt werden, können geeignete Salze insbesondere des Bariums, beispielsweise Bariumoxid und/oder Bariumcarbonat, zugesetzt werden, die NOₓ chemisorptiv (z.B. als Bariumnitrat) zu binden vermögen. Auch ist es möglich, katalytische Substanzen, insbesondere Edelmetalle der Beschichtung zuzusetzen, um somit auch eine katalytische Funktion, beispielsweise eines Drei-Wege-Katalysators zu erzielen.

Insbesondere im Zusammenhang mit einem keramischen Trägerkörper des Adsorbers kann dieser mit Vorteil als Partikelfilter für otto- oder dieselmotorische Partikelemissionen ausgebildet sein. Dieses wird in bekannter Weise durch zum Teil verschlossene Strömungskanäle erzielt, so dass der Abgasstrom die permeablen Wandstrukturen der Strömungskanäle durchdringt und gefiltert wird. Eine solche Partikelfilterfunktion wird zukünftig auch für Ottomotoren von zunehmenden Interesse werden. Die Vorsehung eines separaten Partikelfilters kann somit gegebenenfalls entfallen.

Die in den Figuren 1 und 3 dargestellte Abgasanlage 10 zeigt folgende Funktion, wobei von einem HC-Adsorber 46 ausgegangen wird.

Nach einem Kaltstart des Verbrennungsmotors12, wenn die Katalysatoren 16 und 44 ihre Betriebstemperatur noch nicht aufweisen, ist das Stellmittel 48 vor der Hauptleitung 34 zunächst geschlossen, so dass der gesamte Abgasstrom durch den HC-Adsorber 46 strömt. Dieser speichert die im Abgas enthaltenen Kohlenwasserstoffe, die in den ersten Sekunden nach Motorstart den nicht betriebsbreiten Vorkatalysator 16 unkonvertiert passieren, ein. Die Größe des Adsorbers 46 ist so ausgelegt, dass die Kohlenwasserstoffe so lange vollständig gespeichert werden können, bis der Vorkatalysator 16 seine Light-off-Temperatur erreicht hat und ihre Konvertierung übernimmt.

Hat der Vorkatalysator 16 diese Temperatur erreicht, was durch eine Modellierung oder mittels des Temperatursensors 50 erkannt werden kann, wird das Stellmittel 48 geöffnet, so dass das heiße Abgas direkt über den Abgaskatalysator 44 strömt und diesen erwärmt. In dieser Phase kann der Adsorber 46 bereits eine Temperatur erreicht haben, bei der die gespeicherten Kohlenwasserstoffe freigesetzt werden. Da der Adsorber jedoch nicht durch das Abgas durchströmt wird, findet in dieser Phase praktisch kein Ausspülen von HC aus dem Adsorber 46 statt. Sobald der Abgaskatalysator 44 seine Light-off-Temperatur zumindest in seinem stromaufwärtigen Teil erreicht, beschleunigt sich aufgrund der Exothermie der Konvertierungsreaktionen seine weitere Erwärmung.

Wird mittels des Temperatursensors 52 erkannt, dass auch der Hauptkatalysator 44 seine Anspringtemperatur erreicht hat, wird das Stellmittel 48 wieder teilweise oder vollständig geschlossen, so dass der gesamte beziehungsweise ein bestimmter Anteil des Abgasstroms über den HC-Adsorber 46 geführt wird und diesen weiter erwärmt. Sobald der Adsorber seine Desorptionstemperatur erreicht hat, werden die gespeicherten Kohlenwasserstoffe freigesetzt und strömen in den betriebsbereiten Hauptkatalysator 44, wo sie zu CO₂ und H₂O umgesetzt werden.

Die in Figur 4 gezeigte Ausführungsform der erfindungsgemäßen Katalysatoreinheit 24 unterscheidet sich von der nach Figur 3 lediglich in einer längeren Ausführung des rohrförmigen abgasstromführenden Elements 58, welches hier den Eingangsstutzen 28 des Gehäuses 26 axial überragt. Das Element 58 kann beispielsweise durch eine Schweißnaht mit dem vorderen Rand des Eingangsstutzens 28 verbunden sein. Die hier dargestellte Ausführungsform hat gegenüber der nach Figur 3 im Wesentlichen fertigungstechnische Vorteile.

### Bezugszeichenliste

- 10: Abgasanlage
- 12: Verbrennungsmotor
- 14: Zylinder
- 16: Vorkatalysator
- 18: Abgasrohr
- 20: erste Lambdasonde
- 22: zweite Lambdasonde
- 24: Katalysatoreinheit
- 26: Katalysatorgehäuse
- 28: Eingangsstutzen
- 30: Ausgangsstutzen
- 32: Innenrohr
- 34: Hauptleitung
- 36: Nebenleitung
- 38: Einmündungsbereich
- 40: Einmündungsöffnung
- 42: gemeinsame Abgasleitung
- 44: Hauptkatalysator
- 46: Adsorber
- 48: Stellmittel
- 50: Temperatursensor
- 52: Temperatursensor
- 54, 56: Lagermittel (Faser- oder Blähmatte)
- 58: abgasstromführendes, gasdurchlässiges Element
- 60: Durchgangsöffnung
- 62: Aktuator
- 64: Sensor

## Patentansprüche

1. Abgasanlage (10) für einen Verbrennungsmotor (12), mit einem Abgasweg, der zwei parallele Abgasleitungen (34, 36) aufweist, nämlich eine Hauptleitung (34) sowie eine Nebenleitung (36), welche in eine gemeinsame Abgasleitung (42) münden, wobei in der Nebenleitung (36) ein Adsorber (46) zur reversiblen Sorption unverbrannter Kohlenwasserstoffe (HC) und/oder von Stickoxiden (NOₓ) angeordnet ist; mit einem Stellmittel (48) zur selektiven Leitung eines Abgasstroms in die Hauptleitung (34) und/oder in die Nebenleitung (36) und mit einem stromab der parallelen Abgasleitungen (34, 36) in der gemeinsamen Abgasleitung (42) angeordneten Hauptkatalysator (44), **dadurch gekennzeichnet, dass** stromauf des Adsorbers (46) ein abgasstromführendes, gasdurchlässiges Element (58) mit rohrförmiger Gestalt, deren stromabwärtiges Ende an eine Eintrittsöffnung der innen liegenden der parallelen Abgasleitungen (34, 36) ohne Innenrohr, das den Adsorber (46) trägt und die parallelen Abgasleitungen (34, 36) trennt, anschließt, und mit einer Mehrzahl von Durchgangsöffnungen (60) für den Abgasstrom angeordnet ist, welches das stromaufwärtige Ende der Nebenleitung (36) von den übrigen abgasstromführenden Bereichen trennt.

2. Abgasanlage (10) nach Anspruch 1, **dadurch gekennzeichnet, dass** eine der parallelen Abgasleitungen (34, 36) die andere der parallelen Abgasleitungen (34, 36) zumindest abschnittsweise und/oder konzentrisch umschließt.

3. Abgasanlage (10) nach Anspruch 2, **dadurch gekennzeichnet, dass** die den Adsorber (46) beherbergende Nebenleitung (36) die Hauptleitung (34) umschließt.

4. Abgasanlage (10) nach einem der vorhergehenden Ansprüche, **dadurch gekennzeichnet, dass** das stromaufwärtige Ende des abgasstromführenden, gasdurchlässigen Elements (58) an ein, die parallelen Abgasleitungen (34, 36) beherbergendes Gehäuse (26) oder an einen Eingangsstutzen (28) eines solchen Gehäuses (26) anschließt.

5. Abgasanlage (10) nach einem der vorhergehenden Ansprüche, **dadurch gekennzeichnet, dass** die äußere Wandführung der Hauptleitung (34) zumindest abschnittsweise durch den Adsorber (46) ohne eigenes Rohr gebildet wird.

6. Abgasanlage (10) nach Anspruch 1, **dadurch gekennzeichnet, dass** das stromabwärtige Ende an eine Eintrittsöffnung der Hauptleitung (34) anschließt.

7. Abgasanlage (10) nach einem der Ansprüche 2 bis 6, **dadurch gekennzeichnet, dass** das Stellmittel (48) in einem stromabwärtigen Abschnitt dieses Elements (58) gelagert ist.

8. Abgasanlage (10) nach einem der vorhergehenden Ansprüche, **dadurch gekennzeichnet, dass** das Stellmittel (48) zur selektiven Leitung des Abgasstroms in die Hauptleitung (34) und/oder in die Nebenleitung (36) ausgebildet ist, neben einer geschlossenen Stellung und einer geöffneten Stellung zumindest eine Zwischenstellung einnehmen zu können, in der ein Teil des Abgasstroms in die Hauptleitung (34) und der andere Teil des Abgasstroms in die Nebenleitung (36) gelenkt wird.

9. Abgasanlage (10) nach einem der vorhergehenden Ansprüche, **dadurch gekennzeichnet, dass** der Adsorber (46) eine ringförmige Gestalt aufweist und die Hauptleitung (34) im Wesentlichen durch einen, von dem Adsorber (46) umschlossenen Hohlraum definiert wird.

10. Abgasanlage (10) nach einem der vorhergehenden Ansprüche, **dadurch gekennzeichnet, dass** der Adsorber (46) einen keramischen Trägerkörper umfasst.

11. Abgasanlage (10) nach einem der vorhergehenden Ansprüche, **dadurch gekennzeichnet, dass** der Adsorber (46) eine Partikelfilterfunktion und/oder eine drei-wege-katalytische Funktion aufweist.

12. Abgasanlage (10) nach einem der vorhergehenden Ansprüche, **dadurch gekennzeichnet, dass** der Hauptkatalysator (44) ein Drei-Wege-Katalysator ist.

13. Abgasanlage (10) nach einem der vorhergehenden Ansprüche, **dadurch gekennzeichnet, dass** die parallelen Abgasleitungen (34, 36), der Adsorber (46), das abgasstromführende, gasdurchlässige Element (58) sowie das Stellmittel (48) in einem gemeinsamen Katalysatorgehäuse (26) angeordnet sind, insbesondere zusammen mit dem nachgeschalteten Hauptkatalysator (44).

14. Abgasanlage (10) nach Anspruch 13, **dadurch gekennzeichnet, dass** in dem gemeinsamen Katalysatorgehäuse (26) der nachgeschaltete Hauptkatalysator (44) angeordnet ist.

15. Fahrzeug mit einem Verbrennungsmotor und einer diesem angeschlossenen Abgasanlage (10) nach einem der Ansprüche 1 bis 14.

## Claims

1. Exhaust system (10) for an internal combustion engine (12), having an exhaust-gas path which has two parallel exhaust lines (34, 36), specifically a main line (34) and a secondary line (36), which issue into a common exhaust line (42), wherein an adsorber (46) for the reversible sorption of unburned hydrocarbons (HC) and/or of nitrogen oxides (NOₓ) is arranged in the secondary line (36); having a control means (48) for selectively conducting an exhaust-gas stream into the main line (34) and/or into the secondary line (36), and having a main catalyst (44) arranged in the common exhaust line (42) downstream of the parallel exhaust lines (34, 36), **characterized in that**, upstream of the adsorber (46), there is arranged an exhaust gas flow-conducting, gas-permeable element (58) of tubular form, the downstream end of which element connects to an inlet opening of the inner one of the parallel exhaust lines (34, 36) without an inner tube which bears the adsorber (46) and which separates the parallel exhaust lines (34, 36), and which element has a multiplicity of passage openings (60) for the exhaust-gas flow, and which element separates the upstream end of the secondary line (36) from the other exhaust gas flow-conducting regions.

2. Exhaust system (10) according to. Claim 1, **characterized in that** one of the parallel exhaust lines (34, 36) surrounds the other of the parallel exhaust lines (34, 36) at least in sections and/or concentrically.

3. Exhaust system (10) according to Claim 2, **characterized in that** the secondary line (36) that houses the adsorber (46) surrounds the main line (34).

4. Exhaust system (10) according to one of the preceding claims, **characterized in that** the upstream end of the exhaust gas flow-conducting, gas-permeable element (58) connects to a housing (26) that houses the parallel exhaust lines (34, 36) or to an inlet connector (28) of a housing (26) of said type.

5. Exhaust system (10) according to one of the preceding claims, **characterized in that** the outer wall guide of the main line (34) is formed at least in sections by the adsorber (46), without a dedicated tube.

6. Exhaust system (10) according to Claim 1, **characterized in that** the downstream end connects to an inlet opening of the main line (34).

7. Exhaust system (10) according to one of Claims 2 to 6, **characterized in that** the control means (48) is mounted in a downstream section of said element (58).

8. Exhaust system (10) according to one of the preceding claims, **characterized in that** the control means (48) for selectively conducting the exhaust-gas flow into the main line (34) and/or into the secondary line (36) is designed such that, between a closed position and an open position, it can assume .at least one intermediate position in which one part of the exhaust-gas flow is diverted into the main line (34) and the other part of the exhaust-gas flow is diverted into the secondary line (36).

9. Exhaust system (10) according to one of the preceding claims, **characterized in that** the adsorber (46) has an annular form and the main line (34) is defined substantially by a hollow chamber enclosed by the adsorber (46).

10. Exhaust system (10) according to one of the preceding claims, **characterized in that** the adsorber (46) comprises a ceramic substrate body.

11. Exhaust system (10) according to one of the preceding claims, **characterized in that** the adsorber (46) has a particle filter function and/or a three-way catalyst function.

12. Exhaust system (10) according to one of the preceding claims, **characterized in that** the main catalyst (44) is a three-way catalyst.

13. Exhaust system (10) according to one of the preceding claims, **characterized in that** the parallel exhaust lines (34, 36), the adsorber (46), the exhaust gas flow-conducting, gas-permeable element (58) and the control means (48) are arranged in a common catalyst housing (26), in particular together with the downstream main catalyst (44):

14. Exhaust system (10) according to Claim 13, **characterized in that** the downstream main catalyst (44) is arranged in the common catalyst housing (26).

15. Vehicle having an internal combustion engine and having an exhaust system (10) according to one of Claims 1 to 14 connected thereto.

## Revendications

1. Installation de gaz d'échappement (10) pour un moteur à combustion interne (12), comprenant une ligne de gaz d'échappement qui présente deux conduites de gaz d'échappement parallèles (34, 36), à savoir une conduite principale (34) ainsi qu'une conduite secondaire (36), qui débouchent dans une conduite de gaz d'échappement commune (42), un adsorbeur (46) pour la sorption réversible d'hydrocarbures non brûlés (HC) et/ou d'oxydes d'azote (NOx) étant disposé dans la conduite secondaire (36) ; comprenant un moyen de réglage (48) pour conduire de manière sélective un flux de gaz d'échappement dans la conduite principale (34) et/ou dans la conduite secondaire (36) et comprenant un catalyseur principal (44) disposé en aval des conduites de gaz d'échappement parallèles (34, 36) dans la conduite de gaz d'échappement commune (42), **caractérisée en ce qu'**en amont de l'adsorbeur (46) est disposé un élément perméable aux gaz (58), guidant le flux de gaz d'échappement, de forme tubulaire, dont l'extrémité aval se raccorde à une ouverture d'entrée de la conduite de gaz d'échappement située à l'intérieur parmi les conduites de gaz d'échappement parallèles (34, 36) sans tube interne qui porte l'adsorbeur (46) et sépare les conduites de gaz d'échappement parallèles (34, 36), et comprenant une pluralité d'ouvertures de passage (60) pour le flux de gaz d'échappement, lequel élément sépare l'extrémité amont de la conduite secondaire (36) du reste des régions guidant le flux de gaz d'échappement.

2. Installation de gaz échappement (10) selon, la revendication 1, **caractérisée en ce que** l'une des conduites de gaz d'échappement parallèles (34, 36) entoure l'autre des conduites de gaz d'échappement parallèles (34, 36) au moins en partie et/ou de manière concentrique.

3. Installation de gaz d'échappement (10) selon la revendication 2, **caractérisée en ce que** la conduite secondaire (36) abritant l'adsorbeur (46) entoure la conduite principale (34).

4. Installation de gaz d'échappement (10) selon l'une quelconque des revendications précédentes, **caractérisée en ce que** l'extrémité amont de l'élément perméable aux gaz (58) guidant le flux de gaz d'échappement se raccorde à un boîtier (26) abritant les conduites de gaz d'échappement parallèles (34, 36) ou à une tubulure d'entrée (28) d'un tel boîtier (26).

5. Installation de gaz d'échappement (10) selon l'une quelconque des revendications précédentes, **caractérisée en ce que** le guidage de paroi extérieur de la conduite principale (34) est formé au moins en partie par l'adsorbeur (46) sans tube propre.

6. Installation de gaz d'échappement (10) selon la revendication 1, **caractérisée en ce que** l'extrémité aval se raccorde à une ouverture d'entrée de la conduite principale (34).

7. Installation de gaz d'échappement (10) selon l'une quelconque des revendications 2 à 6, **caractérisée en ce que** le moyen de réglage (48) est supporté dans une portion aval de cet élément (58).

8. Installation de gaz d'échappement (10) selon l'une quelconque des revendications précédentes, **caractérisée en ce que** le moyen de réglage (48) pour conduire de manière sélective le flux de gaz d'échappement dans la conduite principale (34) et/ou dans la conduite secondaire (36) est réalisé de manière à pouvoir adopter, en plus d'une position fermée et d'une position ouverte, au moins une position intermédiaire dans laquelle une partie du flux de gaz d'échappement est déviée dans la conduite principale (34) et l'autre partie du flux de gaz d'échappement est déviée dans la conduite secondaire (36).

9. Installation de gaz d'échappement (10) selon l'une quelconque des revendications précédentes, **caractérisée en ce que** l'adsorbeur (46) présente une forme annulaire et la conduite principale (34) est définie essentiellement par une cavité entourée par l'adsorbeur (46).

10. Installation de gaz échappement (10) selon l'une quelconque des revendications précédentes, **caractérisée en ce que** l'adsorbeur (46) comprend un corps de support en céramique.

11. Installation de gaz d'échappement (10) selon l'une quelconque des revendications précédentes, **caractérisée en ce que** l'adsorbeur (46) présente une fonction de filtre à particules et/ou une fonction catalytique à trois voies.

12. Installation de gaz d'échappement (10) selon l'une quelconque des revendications précédentes, **caractérisée en ce que** le catalyseur principal (44) est un catalyseur à trois voies.

13. Installation dé gaz d'échappement (10) selon l'une quelconque des revendications précédentes, **caractérisée en ce que** les conduites de gaz d'échappement parallèles (34, 36), l'adsorbeur (46), l'élément perméable aux gaz (58), guidant le flux de gaz d'échappement, ainsi que le moyen de réglage (48), sont disposés dans un boîtier de catalyseur commun (26), en particulier conjointement avec le catalyseur principal (44) monté en aval.

14. Installation de gaz d'échappement (10) selon la revendication 13, **caractérisée en ce que** le catalyseur principal (44) monté en aval est disposé dans le boîtier de catalyseur commun (26).

15. Véhicule comprenant un moteur à combustion interne et une installation de gaz d'échappement (10) se raccordant à celui-ci, selon l'une quelconque des revendications 1 à 14.
